# EUROPÄISCHE PATENTSCHRIFT

(11) **EP 0 489 762 B1**
(45) Veröffentlichungstag und Bekanntmachung des Hinweises auf die Patenterteilung: **09.06.1993**
(21) Anmeldenummer: 90912105.5
(22) Anmeldetag: 24.08.1990
(51) Int. Cl.: H02G 3/16

(54) **INSTALLATIONSSYSTEM**
INSTALLATION SYSTEM
SYSTEME D'INSTALLATION

(30) Priorität: 29.08.1989 DE 3928519
(43) Veröffentlichungstag der Anmeldung: 17.06.1992
(73) Patentinhaber: DORMA GmbH + Co. KG, D-58256 Ennepetal (DE)
(72) Erfinder: FREUNDNER, Hasso, D-5884 Halver (DE); GRABOWSKI, Walter, D-5960 Olpe-Biggesee (DE)
(86) Internationale Anmeldenummer: DE9000650
(87) Internationale Veröffentlichungsnummer: WO9103851

(56) Entgegenhaltungen:
- DE-A- 2 341 232
- DE-A- 3 004 950
- DE-A- 3 431 836
- DE-A- 3 834 289
- US-A- 3 922 478

## Beschreibung

Die Erfindung betrifft ein Installationssystem mittels Dosen zur Aufnahme von elektrischen Geräten wie Schaltern, Endverbrauchern, Steckdosen, Kommunikationselementen und dergleichen. Ein solches Installationssystem ist in der DE-OS 30 04 950 beschrieben.

Das dort beschriebene Installationssystem verwendet Dosen zur Aufnahme von elektrischen Geräten, in deren Boden Leiterbahnabschnitte eingelagert sind, wobei die Leiterbahnabschnitte auf einander folgender Installationsdosen durch Verbinder zusammengefaßt werden, die dann auch die Dosen zum Installationssystem zusammenfassen. Ist das Installationssystem erst einmal eingebaut, so ist eine Trennung der Einbaubereiche nicht mehr möglich, man bleibt insoweit also auf die einmal gewählte Verknüpfung festgelegt.

Eine fernmeldetechnische Verbindungs- und Verteilungsdose mit Überspannungsschutz wird in der DE-OS 23 41 232 offenbart. Hier werden Verbindungs- und Verteilerdosen beschrieben, welche in ihrem unteren Bereich einen markanten Vorsprung bzw. im Deckel einen Vorsprung haben. Dieses äußere Kennzeichen soll jedoch nur dem Benutzer die Überspannungsschutzfunktion signalisieren.

Die DE-OS 34 31 836 gibt eine Installationsvorrichtung wieder, welche zum Anschluß von Schaltern, Steckdosen, Dimmern, Antennenanschlüssen und dergleichen vorgesehen ist. Die Aufgabe der hier beschriebenen Erfindung ist, die spezifische elektrische Funktion bestimmende Einrichtung mit möglichst geringem Aufwand auswechselbar zu machen. Einer immer gleich bleibenden Trägerplatte sollen unterschiedliche Arten von Anschlußkabeln wie Netzkabel, Antennenkabel oder dergleichen zugeführt werden können. Der Nachteil dieses Systems liegt jedoch darin, daß die spezifische elektrische Funktion der einzelnen Einrichtungen als vollgekapselte Steckmodule ausgebildet sind.

Ausgehend von dem vorausgehend umrissenen Stand der Technik liegt der Erfindung die Aufgabe zugrunde, für das bekannte Installationsprinzip fertigungstechnich einfach realisierbare und dann auch montagefreundliche Grundelemente anzubieten, die dann zu einer stabilen Raumform zusammengefaßt werden können und die Möglichkeit eröffnen, an dem installierten System bis hin zu den Einbaubereichen Veränderungen vorzunehmen, wenn das verbraucherseitig erwünscht ist. Wobei hervorzuheben ist, daß es sich in diesem Falle nicht um die Endverbrauchergeräte wie Schalter, Steckdosen usw. handelt, sondern um das Grundelement des Installationssystemes.

Diese Aufgabe wird erfindungsgemäß durch ein Installationssystem mit den Kennzeichnenden Merkmalen des Anspruchs 1 gelöst. Dabei werden Installationsdosen ein- oder mehrplätzig dadurch geschaffen, daß in ihrem unteren Bereich eine feste Verdrahtung vorhanden ist, die jedoch auch im Bedarfsfall gegen anders aufgebaute feste Verdrahtungen ausgewechselt werden können. Auch lassen sich diese Dosen untereinander leicht aneinanderreihen, wobei gleichzeitig der gewünschte Installationsabstand gewährleistet wird. Die Endverbrauchergerätschaften werden mittels vorkonfektionierter Anschlußleitungen, die sich an dem Endverbraucher befinden, über ein einfaches Stecksystem mit den entsprechenden im Bodenbereich befindlichen Leitern verbunden.

Die nach der Erfindung zur Anwendung kommenden Installationsdosen sind im Grunde genommen konventionell konzipiert. Hierbei ist insbesondere hervorzuheben, daß die Wandteile mit vorgestanzten ausbrechbaren Ein- bzw. Durchgängen versehen sind, durch welche das Installationssystem mit an- bzw. abführenden Leitungen versorgt werden kann. Die Zuordnung der Leiterkontaktschienen zum Dosenboden, die nach einer speziellen Ausführungsform ihre Einbettung in einen Rücksprung im Dosenboden haben, bildet die denkbar einfachste Lösung der Zuordnung einer solchen Leiterkontaktschiene zur Dose. An die den einzelnen Dosen zugeordneten Leiterbahnen lassen sich in der gewünschten Weise sowohl die Netzleitungen als auch die geschalteten Leitungen als auch die Installationsgeräte, diese über von den Geräten ausgehenden Verbindungsleitungen, individuell nach Schaltplan anschließen. Ein solches System ist im Rahmen der von den Sicherheitsvorschriften gesteckten Grenzen durchaus ausbaufähig, wobei mindestens auf fünf Einbaubereiche abgezielt wird. Als besonders vorteilhaft erweist es sich hierbei, daß auch im Nachhinein, d.h. bei installiertem System, anschlußseitig ohne weiteres beliebige Veränderungen bis hin zur Trennung bzw. Zusammenfassung von Einbaubereichen vorgenommen werden kann, ohne daß bauseits Maßnahmen ergriffen werden müssen.

Die in den Unteransprüchen dargestellten Ausgestaltungen der Erfindung runden das gesamte System ab. Im Sinne der Herbeiführung einer hinreichenden Stabilität der zum Installationssystem zusammengefaßten Grundeinheiten, erweist es sich als zweckmäßig, die Grundeinheiten, also die Ein- und/oder Mehrfachdosen, mit einander durch Formschluß kuppelbar auszubilden. In einer weiteren Ausgestaltung sind die Bestandteile der gehäusebildenden Stirnwände diesen lösbar zugeordnet. Hierdurch wird ein aus mehreren Grundeinheiten bestehendes Installationssystem durchgängig ausgebildet. Die Zusammenfassung der Leiterkontaktschienen der einzelnen Einbaubereiche wird durch Ansetzen von Überbrückungsdrähten an den Adern der Leiterkontaktschienen aufeinanderfolgender Einbaubereiche erleichtert. Bei einer Dreifachkombination von drei Einzeldosen kann z.B. in Ausgestaltung die lösbare Zuordnung einer der Stirnwand entsprechenden Trennwand zu einem der Gehäuse zwischen den Einbaubereichen vorgesehen sein, um im Bedarfsfall eine räumliche Trennung und elektrische Trennung der Einbaubereiche vornehmen zu können, etwa wenn die Einbaubereiche an verschiedenen Speiseleitungen liegen.

In den Zeichnungen wird der erfindungsgemäße Gegenstand anhand eines schematisch dargestellten Ausführungsbeispieles näher erläutert. Es zeigen:
- Figur 1:: Eine erfindungsgemäß ausgestaltete Doppeldose in schaubildlicher Darstellung
- Figur 2:: Die Doppeldose in der Seitenansicht
- Figur 3:: Die Doppeldose in der Stirnansicht
- Figur 4:: Eine der der Dose nach den Figuren 1-3 lösbar zugeordneten Stirnwände

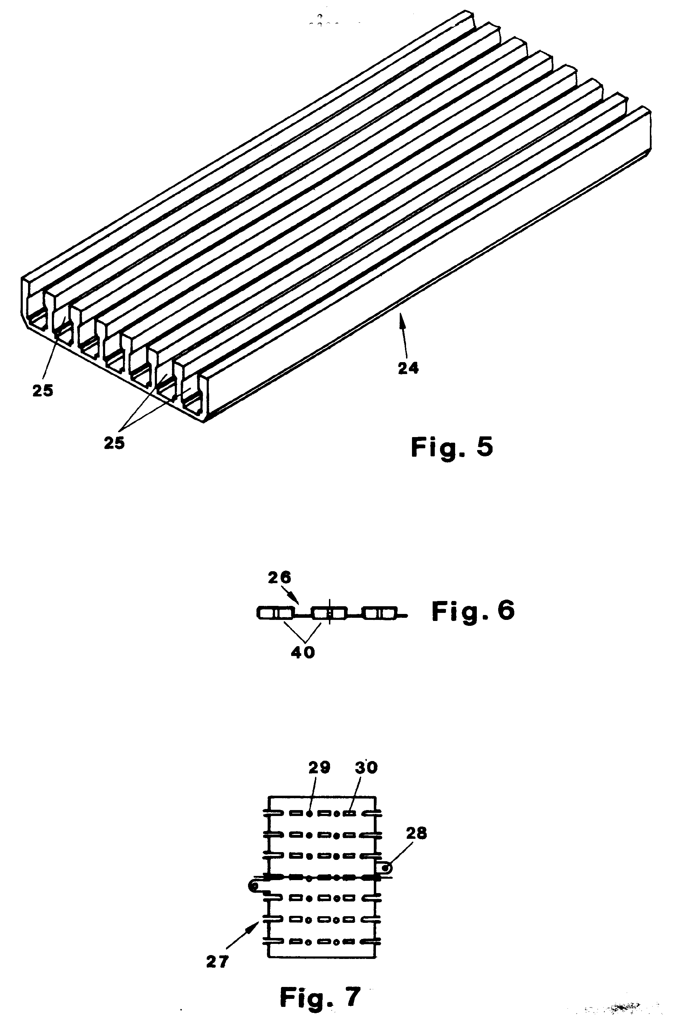

- Figur 5:: Leiterbahnträger in der Perspektive
- Figur 6:: Eine der in den Leiterhanträger nach Figur 5 einlagerbare Leiterkontaktschiene
- Figur 7:: Die dem Leiterbahnträger zugeordnete Abdeckung in der Draufsicht

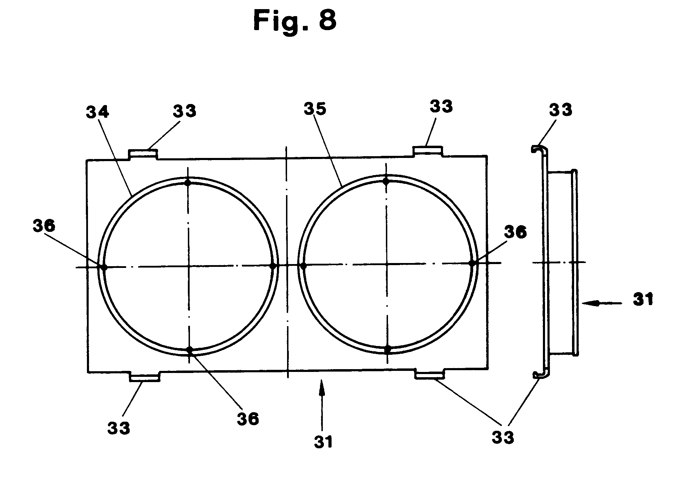

- Figur 8:: Den an der Doppeldose nach Figur 1 ansetzbaren Montagedeckel in der Draufsicht

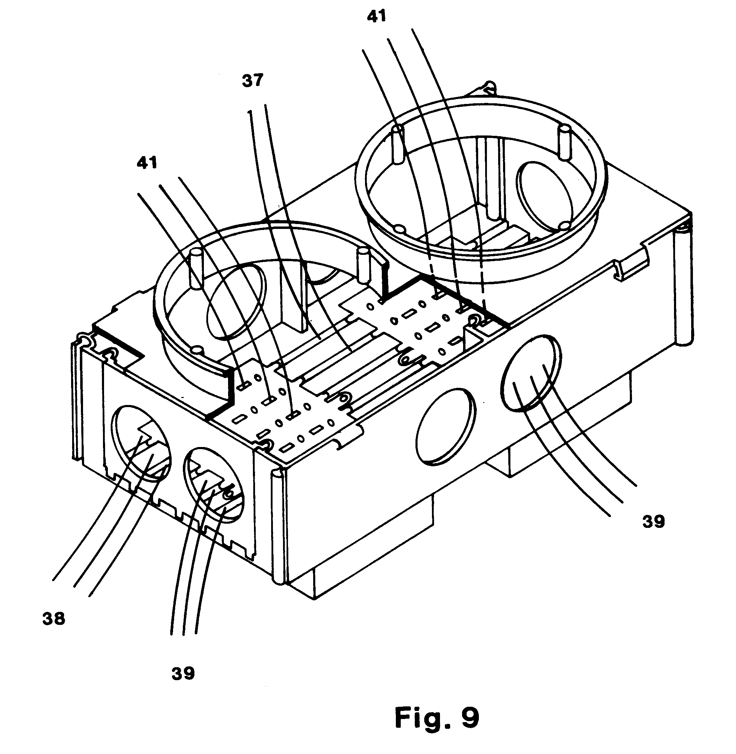

- Figur 9:: Den Montagedeckel in der Stirnansicht
- Figur 10:: Eine Darstellung der Verdrahtung

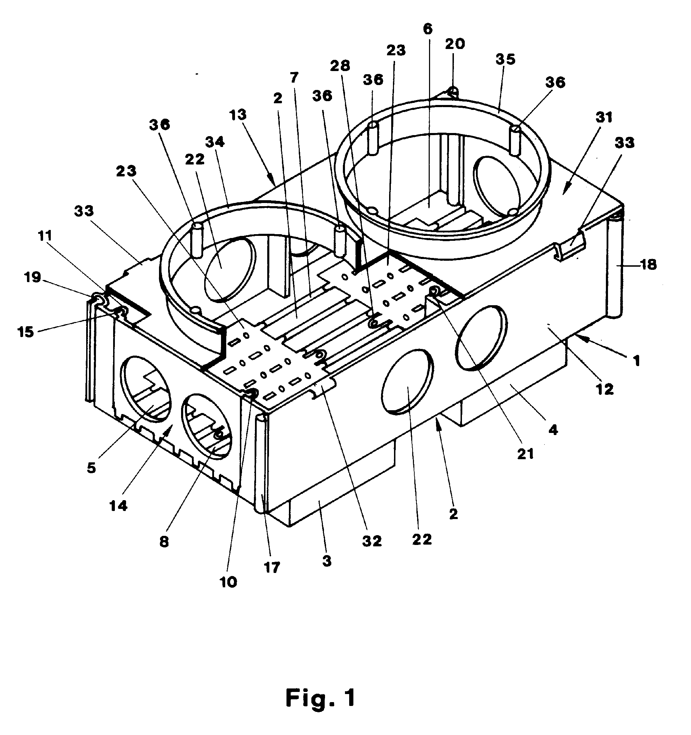

Das Gehäuse (9) der in den Figuren 1 bis 3 dargestellten Doppeldose besteht aus dem Boden (1), der unter Belassung eines Steges (2) im Abstand zwei Rücksprünge (3) und (4) aufweist, den Längswandungen (12) und (13) sowie den lösbar an ihm angesetzten bzw. ansetzbaren Stirnwandteilen (14). Stirnseitig schließen sich an die Rücksprünge (3) und (4) ebenfalls Stegbereiche (5) und (6) an. Diese Stegbereiche (5) und (6) befinden sich in dem Teil des Bodens des Gehäuses (9), welcher nicht von den Rücksprüngen (3) und (4) belegt ist. In den Stegen (2), (5) und (6) sind Längsrillen (7) und (8) ausgebildet. Diese Längsrillen haben die Aufgabe, die Verbindungsdrähte zwischen den einzelnen Anschlußblöcken, die sich innerhalb der Rücksprünge (3) und (4) befinden, aufzunehmen.

Für die lösbare Zuordnung der Stirnwandteile (14) zum Gehäuse (9) sind das Gehäuse und die Stirnwandteile mit korrespondierenden Verriegelungen (10) und (11) und dort einrastenden Vorsprüngen (15) und (16) versehen. Wird z.B. eine Dreierkombination mit zwei verschiedenen Stromkreisen verwendet, so muß zwischen Zweier- und Einerdose eine Brücke in Form einer Stirnwand (14) eingefügt werden. Die Ausnehmungen (42) gestatten es in Verbindung mit den Längsrillen (7) und (8), daß korrespondierende Leitungen auch unterhalb einer Stirnwand (14) durchgeführt werden können.

Die Gehäuse (9) sind an den Stirnseiten weitergehend dann auch noch mit Kupplungsgliedern (17), (18), (19) und (20) versehen, die es ermöglichen, zwei aufeinanderfolgende Gehäuseteile zusammenzufassen. In diesem Fall übt das an einem der Gehäuseteile angesetzte Stirnwandteil (14) ggfs. die Funktion einer Trennwand zwischen den angrenzenden Anschlußbereichen aus. Im Falle einer späteren bauseitigen Änderung kann diese Trennwand ohne weiteres entfernt werden und somit die bestehende Installation problemlos ohne großen Montageaufwand geändert werden. In Erfüllung einer solchen Funktion kann eine Trennwand (14) auch dann in ein bestehendes dargestelltes Gehäuseteil eingefügt werden, wozu am Gehäuseteil weitere Kupplungsteile z.B. (21) vorgesehen sind. Sowohl die Längswandungen (12) und (13) als auch die Stirnwand- bzw. Trennwand (14) sind mit bzw. können mit Abgängen (22) bzw. Durchgängen (23) versehen werden. Diese Abgänge (22) bzw. Durchgänge (23) sind normal verschlossen und können bei Bedarf wahlweise ausgebrochen werden.

Die Rücksprünge (3) und (4) im Boden (1) nehmen die rücksprüngeausfüllenden auswechselbaren Leiterbahnträger (24) auf. Diese Leiterbahnträger bestehen aus einem Isoliermaterial. Der Leiterbahnträger (24) ist mit einer Mehrzahl von im Abstand von einander nebeneinander laufenden Kanälen (25) versehen, in die Leiterkontaktschienen (26) eingefügt sind. Der mit den Leiterkontaktschienen (26) bestückte Leiterbahnträger (24) wird mit einer Abdeckung (27) versehen. Diese Abdeckung (27) deckt die Rücksprünge (3) und (4) im Boden (1) des Gehäuses (9) eingefügten Leiterbahnträgers (24) formschlüssig über die Verbindung (28) ab. Dabei weist die Abdeckung (27) in der Flucht der die Leiterkontaktschienen (26) aufnehmenden Leiterbahnen (25) der Leiterbahnträger (24) in Abständen eine Mehrzahl von Durchbrüchen (29) und Löseschlitze (30) auf. Durch diese Durchbrüche und Schlitze wird die unterhalb der Abdeckung (27) befindliche Leiteranordnung zugänglich. Die anzuschließenden Endverbrauchergeräte, welche in diesem Falle nicht dargestellt sind, werden mit ihren Anschlußdrähten in die entsprechenden Durchbrüche (29) eingeführt und erhalten aufgrund des Federdruckes der Leiterkontaktschiene (26) den entsprechenden Kontakt mit dem Leiter. Soll eine solche Verbindung gelöst werden, so muß in einem neben dem Durchbruch (29) eingeführten Anschlußkabel der Löseschlitz (30) mittels eines kleinen flachen Werkzeuges betätigt werden, um den Kontaktdruck der Leiterkontaktschiene (26) von dem eingeführten Verbindungskabel zu entfernen.

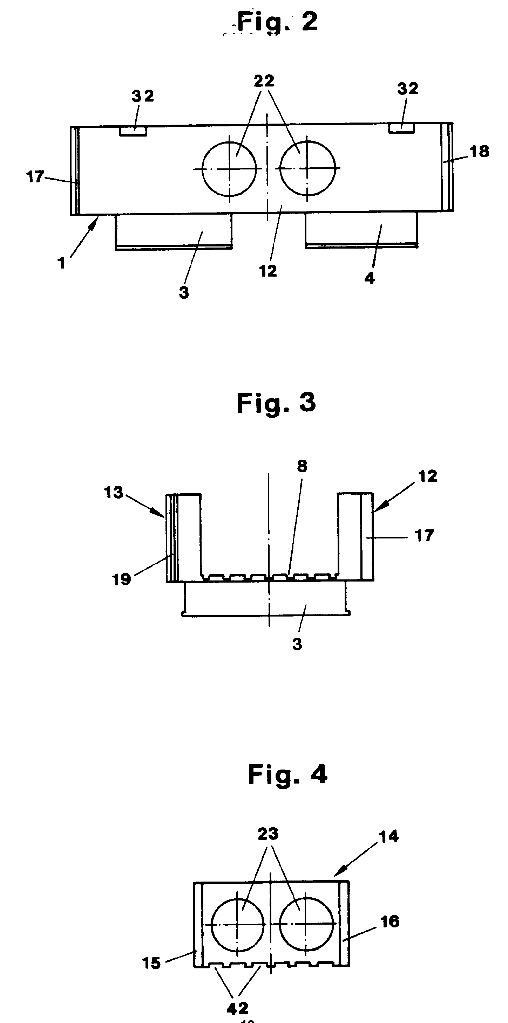

Damit das in Fig. 1 und Fig. 2 dargestellte Gehäuse (9) des möglichen Ausführungsbeispieles komplett wird, gehört auch noch ein Montagedeckel (31) dazu. Dieser Montagedeckel wird am Gehäuse formschlüssig angesetzt. Die Verbindung des Montagedeckels (31) und des Gehäuses (29) ist über die Ansätze (32) an den Seitenwandungen (12) und (13) den Formschluß bildenden Klauen (33) gewährleistet. Diese Verbindung ist mittels eines z.B. Schraubendrehers ohne weiteres schnell zu lösen. Damit werden die unter der Abdeckung (27) in den Rücksprüngen liegenden Leiterbahnträger zugänglich und können im Bedarfsfall nach Entfernung der Abdeckung (27) oder als gesamter Block ausgewechselt werden.

Aus dem Montagedeckel (31) springen Stützringe (34) und (35) vor. Diese Stützringe (34) und (35) haben die Aufgabe, die jeweils benutzten Installationsgeräte aufzunehmen. Mittels einer Verschraubung (36) wird hier eine kraftschlüssige Verbindung zwischen dem Installationsgerät und dem Installationssystem hergestellt.

Dem jeweiligen Bedarfsfall Rechnung tragend wird die erforderliche Anzahl von Dosen durch Formschluß über die Kupplungsglieder (17), (18), (19) und (20) zusammengefaßt. Bei Bereithaltung auch einer im Prinzip für die dargestellte Doppeldose ausgebildeten Einzeldose, lassen sich so Installationssysteme mit einer unter Beachtung der Sicherheitsvorschriften beliebigen Anzahl von Einbaubereichen ausbilden. Das so ausgebildete Installationssystem erhält anschließend eine, den jeweiligen Installationsvorgaben Rechnung tragende, Verdrahtung durch Anklemmen von die aufeinander folgende Installationsbereiche überbrückenden Brückendrähte (37) an den Bestandteil der Installationsbereiche bildenden, in den Leiterbahnträgern zusammengefaßten Leiterabschnitten. Anschließend erfolgt der Anschluß des Installationssystems an die Speiseleitung (38) der Netzleitung sowie oder zusätzlich an die Verbindung (39) der geschalteten Leitungen, wobei die Netzleitung in der Regel durch eines der Stirnwandteile (14) geführt wird und die geschalteten Leitungen sowohl durch die Stirnwandteile (14) als auch durch die Seitenwandungen (12) und (13) der Abgänge (22) oder Durchgänge (23) des Gehäuses geführt werden können. Angeschlossen werden die Adern (38) der Netzleitungen und der Verbindungen (39) der geschalteten Leitungen an die durch die Brückendrähte (37) zu durchgehenden Leitern zusammengefaßten Leiterkontaktschienen (26) in den einzelnen Leiterbahnkanälen (25) durch Anklemmen der durch die Abdeckung (27) der Leiterbahnträger (24) geführten, in die Bestandteil der Leiterkontaktschienen (26) bildenden Klemmen (40) eingeführten Leitungen (26) bzw. Verbindungen (29) in der Regel in einem in eine der Stirnseiten angrenzenden Bereich des Installationssystems. Das so verdrahtete Installationssystem wird sodann mit dem Montagedeckel (31) versehen unter Putz oder auf Putz installiert. Danach werden die Installationsgeräte über Verbindungsleitungen (41) in den jeweiligen Einbaubereich an die Leiterbahn dem Schaltplan entsprechend angeklemmt. Das Anklemmen kann durch an den Verbindungsleitungen befindlichen Polschuhen oder aber auch durch Stecken der abisolierten Verbindungsleitungen (41) durch die Durchbrüche (29) zur Leiterkontaktschiene (26) geschehen. Die Verbindungsleitungen (41) wiederum werden durch in der Abdeckung (27) für die Leiterbahnträger (24) vorgesehenen Durchgänge (29) geführt, um als Bestandteil der leiterbildenden noch freien Klemmen (40) angesetzt zu werden. Das angeschlossene, in das Gehäuse eingeführte Installationsgerät, daß sich im in das Gehäuse (9) eingefügten Zustand auf dem Stützring (34 und 35) des Montagedeckels (31) abstützt, wird anschließend durch die Schraubverbindung (36) mit dem Montagedeckel (31) verbunden.

Sämtliche, im Installationssystem vorgenommenen elektrischen Verknüpfungen lassen sich so im Bedarfsfall auch am installierten System ohne weiteres ohne großen Aufwand ändern. Auch können die in den Rücksprüngen eingebetteten Leiterbahnabschnitte durch entsprechend andere Leiterbahnabschnitte z.B. für Kommunikationssysteme ausgewechselt werden. Hierbei sind die jeweilig vorliegenden Vorschriften der einzelnen Genehmigungsinstitute zu berücksichtigen wie insbesondere Abstände der Leiter untereinander und dem entsprechenden Kontaktdruck. Durch diese erfinderische Maßnahme wird das gesamte System sehr flexibel und gibt dem Installateur einen wesentlich größeren Raum für Installationen.

### Bezugszeichenverzeichnis

- 1.: Boden
- 2.: Steg
- 3.: Rücksprung
- 4.: Rücksprung
- 5.: Stegbereiche
- 6.: Stegbereiche
- 7.: Längsrillen
- 8.: Längsrillen
- 9.: Gehäuse
- 10.: Verriegelung
- 11: Verriegelung
- 12.: Längswandung
- 13.: Längswandung
- 14.: Stirnwandteil
- 15.: Vorsprung
- 16.: Vorsprung
- 17.: Kupplungsglied
- 18.: Kupplungsglied
- 19.: Kupplungsglied
- 20.: Kupplungsglied
- 21.: Verriegelung
- 22.: Abgang
- 23.: Durchgang
- 24.: Leiterbahnträger
- 25.: Leiterbahnkanal
- 26.: Leiterkontaktschienen
- 27.: Abdeckung
- 28.: Verbindung
- 29.: Durchbruch
- 30.: Löseschlitz
- 31.: Montagedeckel
- 32.: Absatz
- 33.: Klauen
- 34.: Stützring
- 35.: Stützring
- 36.: Verschraubung
- 37.: Brückendrähte
- 38.: Speiseleitung
- 39.: Verbindung
- 40.: Klemmen
- 41.: Verbindungsleitung
- 42.: Ausnehmung

## Patentansprüche

1. Installationssystem mit Dosen zur Aufnahme von elektrischen Geräten wie Schaltern, Steckdosen, Kommunikationselementen und dergleichen, zur Installation der in Reihe anzuordnenden elektrischen Geräte mit mehradrigen, vom Doseninneren her zugänglichen, jeweils einen Installationsbereich abdeckenden Leiterbahnabschnitten im Bodenbereich der Dosen mit Verbindungsmöglichkeiten für die Adern der Leiterbahnabschnitte aufeinanderfolgender Installationsbereiche mit eingangs- bzw. abgangsseitigen Anschlußmöglichkeiten für die Adern der Leiterbahnabschnitte an die Versorgungsleitungen, mit Ein- bzw. Durchgängen (22, bzw.23) für die Leitungen in den Wandungen versehene im Horizontalschnitt vorzugsweise ein- oder mehrfach Installationsdosen, dadurch gekennzeichnet, daß mit in sie einfügbaren unterhalb des jeweils zu installierenden elektrischen Gerätes gegen den Dosenboden fixiert zur Anlage kommenden auswechselbaren Leiterbahnträger (24) mit Leiterbahnabschnitten mit vom Doseninneren her zugänglichen, sowohl für die Verbindung der Leiterkontaktschienen (26), der Leiterbahnabschnitte stoßend aufeinanderfolgenden Dosen, bzw. für die Verbindung der Leiterkontaktschienen (26) der in einer Mehrfachdose befindlichen Leiterbahnabschnitte sowie für den eingangs- bzw. abgangsseitigen Anschluß an die Netzleitung und an die geschalteten Leitungen, als auch für den Anschluß der elektrischen Geräte zugänglichen Leiterkontaktschienen (26).

2. Installationssystem nach Anspruch 1, dadurch gekennzeichnet, daß die Installationsdosen in ihrem Bodenteil mindestens einen Rücksprung (3) zur Aufnahme der Leiterbahnträger (24) haben.

3. Installationssystem nach Anspruch 1 und 2, dadurch gekennzeichnet, daß die an die Rücksprünge (3) und (4) angrenzenden erhabenen Bereiche des Dosenbodens in der Flucht der Leiterkontaktschienen (26) der Leiterbahnabschnitte mit Längsrillen (7) und (8) versehen sind.

4. Installationssystem nach einem der Ansprüche 1 bis 3, dadurch gekennzeichnet, daß durch gegenüber der Dose fixierbare Abdeckungen (27) für die Leiterbahnträger (24) mit mindestens zwei beabstandeten Durchgängen zu jeder in der Leiterkontaktschienen (26) der Leiterbahnabschnitte.

5. Installationssystem nach einem der vorhergehenden Ansprüche, dadurch gekennzeichnet, daß die Stirnseiten der Dose von an oder in ihr formschlüssig an- oder einfügbaren Stirnwandteilen (14) gebildet werden.

6. Installationssystem nach einem der Ansprüche 1 bis 5, dadurch gekennzeichnet, daß durch formschlüssig in die Dose einfügbare, die Installationsbereiche gegeneinander abgrenzende Trennwände eingefügt werden können.

7. Installationssystem nach einem der Ansprüche 1 bis 6, dadurch gekennzeichnet, daß die Dosen mit ein Zusammenfassen aufeinanderfolgender Dosen ermöglichenden Kupplungsgliedern (17), (18), (19) und (20) versehen sind.

8. Installationssystem nach den Ansprüchen 1 bis 7, dadurch gekennzeichnet, daß ein gegenüber der Dose fixierbarer Montagedeckel (31) für das zu installierende Gerät vorhanden ist.

9. Installationssystem nach Anspruch 8, dadurch gekennzeichnet, daß die in entsprechender Anzahl vorzusehenden Montagedeckel (31) in einer Montageplatte zusammengefaßt sind.

10. Installationssystem nach den Ansprüchen 1 bis 4, dadurch gekennzeichnet, daß die Leiterbahnträger (24) mit der zugehörigen Abdeckung (27) auswechselbar sind.

## Claims

1. An installation system with boxes for holding electrical appliances such as switches, sockets, communication elements and the like, for installation of electric appliances disposed in series and with multi-core printed conductor portions in the bottom region of the boxes, accessible from the interior of the boxes and each covering an installation region, with facilities for connecting the cores of the printed conductor portions of successive installation regions to input or output connection facilities (22 resp. 23) for connecting the cores of the printed conductor portions to the supply lines, with preferably single or multiple installation boxes provided in horizontal section with inlets or bushes for the lines in the walls, characterized in that with interchangeable printed conductor holders (24) abutting and fixed against the bottom of the boxes insertable into them below the respective electric appliance to be installed with printed conductor portions with adjacent successive boxes accessible from the box interiors, for connecting the printed conductor rails (26) of the printed conductor portions, or for connecting the printed conductor rails (26) of the printed conductor portions in a multiple box or for input-side or output-side connection to the mains and to the printed circuits and for connection of the printed conductor rails (26) accessible to the electric appliances.

2. An installation system according to claim 1, characterized in that the installation boxes have at least one recess (3) in the bottom to receive the printed conductor holders (24).

3. An installation system according to claim 1 and 2, characterized in that the raised regions of the bottom of the box adjacent the recesses (3 and 4) are provided with longitudinal grooves (7 and 8) in line with the conductor contact rails (26) of the printed conductor portions.

4. An installation system according to any of claims 1 to 3, characterized in that by covers (27) for the printed conductor holder (24), the covers being securable relative to the box and having at least two spaced-apart passages for each in the conductor contact rails (26) of the printed conductor portions.

5. An installation system according to any of the preceding claims, characterized in that the end faces of the box are formed by end wall parts (14) for positively attaching thereto or inserting therein.

6. An installation system according to any of claims 1 to 5, characterized in that by partition walls positively insertable into the box and bounding the installation regions from one another can be inserted.

7. An installation system according to nay of claims 1 to 6, characterized in that the boxes are provided with coupling elements (17, 18, 19 and 20) for securing successive boxes together.

8. An installation system according to claims 1 to 7, characterized in that an assembly cover (31) für the appliance to be installed in provided and can be secured relative to the box

9. An installation system according to claim 8, characterized in that assembly covers (31), a suitable number of which are to be provided, are combined in an assembly plate.

10. An installation system according to claims 1 to 4, characterized in that the printed conductor holders (24) and the associated cover (27) are replaceable.

## Revendications

1. Système d'installation composé de boîtes destinées à recevoir des appareillages électriques, comme des commutateurs, des prises de courant, des éléments de communication et des appareils analogues, système destiné à l'installation d'appareils électriques à disposer en série avec des tronçons de piste conductrice multifilaires, accessible depuis l'intérieur des boîtes, recouvrant respectivement une zone de l'installation, troçons situés dans le fond des boîtes, avec des possibilités de connexion pour les conducteurs des tronçons de piste conductrice des zones consécutives de l'installation, avec des possibilités de raccordement du côté arrivée ou du côté sortie (22 resp. 23) pour les conducteurs des tronçons de piste conductrice sur les lignes d'alimentation, avec des boîtes d'installation simples ou multiples munies de préférence en coupe horizontale d'ouvertures ou de passages dans les parois pour les lignes, caractérisé en ce que
- il existe des supports de piste conductrice (24), échangeables, insérables dans la boîte, venant en appui fixe contre le fond de la boîte en dessous de l'appareillage électrique respectivement à installer, supports ayant des tronçons de piste conductrice avec des boîtes successives mises bout à bout, accessibles à partir de l'intérieur des boîtes, aussi bien pour la liaison des rails conducteurs de contact (26) des tronçons de piste conductrice, ou pour la liaison des rails conducteurs de contact (26) des tronçons de piste conductrice se trouvant dans une boîte multiple, ainsi que pour le raccordement du côté arrivée ou du côté sortie au réseau at aux lignes branchées, que pour le raccordement des rails conducteurs de contact (26) accessibles aux appareils électriques.

2. Système d'installation selon la revendication 1, caractérisé en ce que
- les boîtes d'installation ont sur leur fond au moins un emboîtement (3) pour recevoir les supports de piste conductrice (24).

3. Système d'installation selon la revendication 1 ou la revendication 2, caractérisé en ce que
- les zones en relief du fond de boîte voisines des emboîtements (3) et (4) sont munies dans l'alignement des rails conducteurs de contact (26) des tronçons de piste conductrice de rainures longitudinales (7) et (8).

4. Système d'installation selon une des revendications 1 à 3, caractérisé en ce que
- des pièces de recouvrement (27) pouvant être fixées par rapport à la boîte pour chacune d'elle et destinées aux supports de piste conductrice (24) sont munies d'au moins de deux orifices de passage écartés par rapport à chacun des rails conducteurs de contact (26) des tronçons de piste conductrice.

5. Système d'installation selon une des revendications précédentes, caractérisé en ce que
- les faces frontales de la boîte sont constituées de parties de parois frontales (14) accolées contre la boîte ou insérées dans celle-ci par engagement de forme.

6. Système d'installation selon une des revendications 1 à 5, caractérisé en ce que
- des parois de séparation insérables par engagement de forme dans la boîte et délimitant mutuellement les domaines de l'installation peuvent être emboîtées.

7. Système d'installation selon une des revendications 1 à 6, caractérisé en ce que
- les boîtes sont munies d'éléments d'accouplement (17), (18), (19) et (20) qui rendent possible un assemblage de boîtes consécutives.

8. Système d'installation selon les revendications 1 à 7, caractérisé en ce que
- un couvercle de montage (31) existe pour recouvrir l'appareillage à installer.

9. Système d'installation selon la revendication 8, caractérisé en ce que
- les couvercles de montage (31) à prévoir en nombre correspondant sont réunis en une plaque de montage.

10. Système d'installation selon la revendication 1 à 4, caractérisé en ce que
- les supports de piste conductrice (24) avec leur recouvrement correspondant (27) peuvent être échangés.
